# EUROPÄISCHE PATENTSCHRIFT

(11) **EP 2 690 398 B1**
(45) Veröffentlichungstag und Bekanntmachung des Hinweises auf die Patenterteilung: **10.12.2014**
(21) Anmeldenummer: 13174022.7
(22) Anmeldetag: 27.06.2013
(51) Int. Cl.: G01B 11/27

(54) **Vorrichtung zum Ermitteln der Lage von mechanischen Elementen**
Apparatus for determining the position of mechanical elements
Dispositif de détermination de la position d'éléments mécaniques

(30) Priorität: 23.07.2012 DE 102012014520
(43) Veröffentlichungstag der Anmeldung: 29.01.2014
(73) Patentinhaber: Prüftechnik Dieter Busch AG, 85737 Ismaning (DE)
(72) Erfinder: Lysen, Heinrich, 85748 Garching (DE)

(56) Entgegenhaltungen:
- EP-A2- 0 962 746
- EP-A2- 1 037 013
- US-A- 5 513 000

## Beschreibung

Die Erfindung betrifft eine Vorrichtung zum Ermitteln der Lage eines ersten und eines zweiten mechanischen Elements zueinander, mit einer ersten Messeinheit zum Ansetzen an das erste mechanische Element und einer zweiten Messeinheit zum Ansetzen an das zweite mechanische Element sowie einer Auswerteeinheit.

Einer solche Vorrichtung kann beispielsweise zum Ermitteln der Ausrichtung von zwei Wellen zueinander ausgebildet sein.

Typischerweise weist bei solchen Ausrichtmessvorrichtungen mindestens einer der beiden Messeinheiten eine Lichtquelle zum Erzeugen eines Lichtstrahls auf, dessen Auftreffpunkt auf einem oder mehreren Detektoren an der anderen Messeinheit oder auf einem Detektor an der mit der Lichtquelle versehenen Messeinheit ermittelt wird, wobei im letzteren Fall die andere Messeinheit den Lichtstrahl zurückreflektiert. Typischerweise wird zum Ermitteln der Ausrichtung der Wellen zudeinander die Lage des Auftreffpunkts des Lichtstrals in mehreren Rotationswinkel-Positionen ermittelt, wozu die Messeinheiten entlang der Umfangsfläche verschoben werden oder die Wellen mit den Messeinheiten gedreht werden.

In der DE 33 20 163 A1 und der DE 39 11 307 A1 sind Wellenausrichtungs-Messvorrichtungen beschrieben, bei welchen die erste Messeinheit einen Lichtstrahl aussendet, der von einem Spiegelprisma der zweiten Messeinheit auf einen optischen Detektor der ersten Messeinheit zurückreflektiert wird.

In der DE 33 35 336 A1 ist eine Wellenausrichtungs-Messvorrichtung beschrieben, bei welcher sowohl die erste als auch die zweite Messeinheit jeweils einen Lichtstrahl aussenden und einen optischen Detektor aufweisen, wobei der Lichtstrahl jeweils auf den Detektor der anderen Messeinheit gerichtet wird.

Aus der DE 38 14 466 A1 ist eine Wellenausrichtungs-Messvorrichtung bekannt, bei welcher die erste Messeinheit einen Lichtstrahl aussendet, der auf zwei in axialer Richtung hintereinander angeordnete optische Detektoren der zweiten Messeinheit fällt.

Aus der WO 03/067187 A1 ist eine Wellenausrichtungs-Messvorrichtung bekannt, bei welcher die erste Messeinheit einen fächerförmigen Strahl aussendet, der auf zwei in axialer Richtung hintereinander angeordnete optische Detektoren der zweiten Messeinheit fällt.

Aus der WO 00/28275 A1 ist eine Wellenausrichtungs-Messvorrichtung bekannt, bei welcher zwei Messeinheiten an jeweils eine Stirnseite der beiden Wellen angebracht werden, wobei die erste Messeinheit einen fächerförmigen Lichtstrahl aussendet, der drei in einer Ebene der zweiten Messvorrichtung angeordnete Markierungsstifte seitlich trifft.

In der EP 0 962 746 A2 ist eine Wellenausrichtungs-Messvorrichtung beschrieben, bei welcher die erste Einheit eine Quelle für einen Lichtstrahl in einer ersten Farbe, einen Strahlteiler sowie einen farbempfindlichen CCD-Detektor und die zweite Einheit eine Quelle für einen Lichtstrahl in einer zweiten Farbe sowie einen Farbteiler (farbselektiver Strahlteiler) aufweist, der für die erste Farbe reflektierend und für die zweite Farbe transmittierend ist, wobei die Lichtquelle der zweiten Einheit von der ersten Einheit aus gesehen hinter dem Farbteiler angeordnet ist und die Lichtquelle der ersten Einheit von der zweiten Einheit aus gesehen hinter dem Strahlteiler angeordnet ist. Der von der ersten Einheit ausgesendete Lichtstrahl durchdringt zunächst den Strahlteiler der ersten Einheit und wird dann an dem Farbteiler der zweiten Einheit reflektiert, wobei dieser reflektierte Strahl wiederum an den Strahlteiler der ersten Einheit reflektiert wird, um auf den Detektor zu gelangen. Der Lichtstrahl aus der zweiten Einheit durchdringt zunächst den Farbteiler der zweiten Einheit und wird von dem Strahlteile der ersten Einheit auf den Detektor reflektiert.

In der EP 2 093 537 A1 ist Wellenausrichtungs-Messvorrichtung beschrieben, bei welcher die erste Messeinheit einen aufgefächerten Lichtstrahl aussendet, der auf zwei seitlich in Abstand zueinander parallel angeordnete optische Streifendetektoren der zweiten Messeinheit fällt, wobei die Längsrichtung der Detektoren senkrecht zu der Fächerebene des Lichtstrahls angeordnet ist.

In der EP 1 037 013 A2 ist eine Wellenausrichtvorrichtung beschrieben, bei welcher ein Lichtstrahlbündel, welches als nicht-kohärentes mehrfarbiges Licht ausgebildet sein, kann auf eine als Tripleprisma ausgebildete Reflektoranordnung gerichtet wird, welche eine teilreflektierende Frontfläche aufweist, wobei der transmittierte Teil des einfallenden Lichts an einer hinteren Fläche des Prismas reflektiert wird und ebenso wie der reflektierte Teil des einfallenden Licht auf einen Detektor gerichtet wird. Alternativ kann das Tripleprisma durch eine teilverspiegelte plankonvexe Linse mit einer beispielsweise zu 40 % reflektierenden teilspiegelnden Schicht ausgebildet sein kann.

Bei allen hier gewürdigten Wellenausrichtungs-Messvorrichtungen wird jeweils der Auftreffpunkt eines Lichtstrahls auf einer Detektorfläche ermittelt und ausgewertet.

Es ist Aufgabe der vorliegenden Erfindung, eine Vorrichtung zum Ermitteln der Lage eines ersten und zweiten mechanischen Elements zueinander zu schaffen, welche eine hohe Genauigkeit und geringe Fehlerempfindlichkeit der Lagebestimmung ermöglicht.

Erfindungsgemäß wird diese Aufgabe gelöst durch eine Vorrichtung gemäß Anspruch 1.

Bei der erfindungsgemäßen Lösung wird das Erzeugen von zwei Lichtstrahlenbündel, die im Wesentlichen in die gleiche Richtung (mit einer wechselseitigen Divergenz von typischerweise etwa 10 mrad und maximal 100 mrad) abgestrahlt werden, sich aber spektral unterscheiden, mit einer farbselektiven Reflektoranordnung, welche das erste Lichtstrahlenbündel an einer der ersten Messeinheit mit der Lichtquelle zugewandten Fläche reflektiert und das zweite Lichtstrahlenbündel an mindestens einer rückwärtigen Fläche reflektiert, kombiniert, um aus den Auftreffpositionen des ersten und zweiten Lichtstrahlenbündels auf dem Detektor, welcher wie die Lichtquelle in der ersten Messeinheit angeordnet ist, die Lage der beiden Messeinheiten und damit die Lage der beiden mechanischen Elemente zueinander zu ermitteln.

Durch die damit realisierte Weiterentwickulng des beispielsweise in der DE 39 11 307 A1 beschriebenen Messverfahrens mittels Lichtstrahlenbündeln unterschiedlicher spektraler Zusammensetzung kann die Genauigkeit und Fehlerempfindlichkeit des Verfahrens verbessert werden, da ein zweites Lichtstrahlenbündel bei der Messung zur Verfügung steht, welches von dem ersten Lichtstrahlenbündel unterscheidbar ist und in anderer Weise an der Reflektoranordnung reflektiert wird als das erste Lichtstrahlenbündel.

Wenn die erfindungsgemäße Vorrichtung beispielsweise für das Ausrichten von zwei Wellen relativ zueinander verwendet wird, wird die Verfälschung des Messergebnisses durch ein Kupplungsspiel zwischen den beiden Wellen verringert: Beim Ausrichten müssen die Verbindungsschrauben zwischen den Wellen gelockert werden, so dass die Bewegung der beiden Wellen in demselben Winkelbereich nicht mehr gewährleistet ist, wenn die beiden Wellen in verschiedene Messpositionen gedreht werden; entsprechend ist dann auch die feste Zuordnung der beiden mit den Wellen verbundenen Messeinheiten nicht mehr gegeben, so dass eine Verschiebung des Lichtflecks auf dem Detektor als Messfehler auftreten kann. Da bei der Erfindung zwei unterschiedlich reflektierte und damit durch das Kupplungsspiel unterschiedliche beeinflusste Lichtstrahlenbündel auf dem Detektor auftreffen. kann eine durch ein Kupplungsspiel verursachte Verschiebung des Lichtflecks auf dem Detektor erkannt und kompensiert werden.

Da durch die Verwendung zweier spektral unterschiedlicher Lichtstrahlenbündel die Relexion des ersten Lichtstrahlenbündels von der Reflexion des zweiten Lichtstrahlenbündels getrennt werden kann, erfolgt weder ein Durchgriff des Parallelversatzes der Wellen in den Winkelversatz der Wellen noch ein Durchgriff des Winkelversatzes der Wellen in den Parallelversatz der Wellen. Auch eine Drehung der Reflektoranordnung um die Strahlachse erzwugt in erster Näherung, d.h. für kleine Winkel, keinen Fehler.

Die Verwendung von zwei unterscheidbaren Lichtstrahlenbündeln ermöglicht ferner auch eine verbesserte Messung des Abstands zwischen den beiden Messeinheiten, wobei man nicht nur die Divergenz des einzelnen Lichtstrahlenbündels sondern insbesondere auch den in der Regel leicht unterschiedlichen Abstrahlwinkel der beiden Lichtstrahlenbündel zueinander, d.h, ihre Divergenz zueinander, ausnutzen kann. Die Verwendung von zwei unterscheidbaren Lichtstrahlenbündeln kann also ein dritter Freiheitsgrad gemessen werden.

In besonders vorteilhafter Ausgestaltung der Erfindung werden das erste und zweite Lichtstrahlenbündel jeweils fächerförmig erzeugt, wobei der Detektor linienförmig (als analoger Streifendetektor oder als digitaler Zeilendetektor) ausgebildet ist, wobei die Auftrefflinie des Fächerprofils des ersten und zweiten Lichtstrahlenbündels auf dem Detektor zweckmäßigerweise im Wesentlichen senkrecht zu der Längsrichtung des Detektors steht. Durch die Verwendung eines linienförmigen Detektors kann der Messbereich bei gleichen Kosten vergrößert werden, da eine Vergrößerung des Detektors beim linienförmigen Detektor ja nur in eine Richtung erfolgt und entsprechend nur linear statt quadratisch wie beim Flächendetektor mit den Detektorkosten skaliert. Ferner kann durch eine fächerförmige Ausgestaltung der Lichtstrahlenbündel die Justierung der beiden Messeinheiten relativ zueinander vereinfacht werden, da auf eine genaue Justierung in Richtungen innerhalb bzw. paralellel zu der Fächerebene verzichtet werden kann. Insbesondere ist es dabei ausreichend, wenn die Reflektoranordnung nur in einer Ebene bezüglich der ersten Messeinheit, d.h. bzgl. der Lichtquelle und dem Detektor, verstellbar ist (insbesondere ist keine Drehung der Reflektoranordnung um eine Achse senkrecht zu der Fächerebene nötig).

Vorzugsweise ist die Reflektoranordnung als Porro-Prisma (auch als Dachkantprisma bezeichnet) ausgebildet, wobei zwei unter einem rechten Winkel zueinander angeordnete rückwärtige Reflexionsflächen für das transmittierte zweite Lichtstrahlenbündel vorhanden sind; bei der Verwendung von fächerförmigen Lichtstrahlenbündeln ist die Fächerebene im Wesentlichen parallel zu der Dachkante des Prismas orientiert. Alternativ kann die Reflektoranordnung auch als Tripel-Prisma ausgebildet sein, wobei dann drei rückwärtige Reflexionsflächen für das transmittierte zweite Lichtstrahlenbündel vorhanden sind.

Die beiden Lichtstrahlenbündel werden mittels einer Dual-Wave-Laserdiode erzeugt; alternativ können jedoch auch zwei parallel nebeneinander angeordnete Laserdioden verwendet werden.

Vorzugsweise ist die Vorrichtung zum Ermitteln der Ausrichtung von Wellen zueinander ausgebildet, wobei die erste Messeinheit zum Ansetzen an eine Umfangsfläche der ersten Welle und die zweite Messeinheit zum Ansetzen an eine Umfangsfläche der zweiten Welle ausgebildet ist.

Weitere bevorzugte Ausgestaltungen der Erfindung ergeben sich aus den Unteransprüchen.

Im Folgenden werden Ausführungsformen der Erfindung anhand der beigefügten Zeichnungen beispielhaft näher erläutert. Dabei zeigen:
- Fig. 1: eine seitliche Ansicht eines ersten Beispiels einer erfindungsgemäßen Lageermittlungsvorrichtung;
- Fig. 2: eine Aufsicht der Vorrichtung von Fig. 1;
- Fig. 3: eine Frontansicht der der rechten Messeinheit zugewandten Fläche der linken Messeinrichtung, gesehen von der in Fig. 1 und 2 rechts liegenden Messeinrichtung;
- Fig. 4: eine schematische seitliche Ansicht einer anderen Ausführungsform einer erfindungsgemäßen Lageermittlungsvorrichtung;
- Fig. 5: eine Ansicht wie Fig. 4, wobei eine abgewandelte Ausführungsform gezeigt ist; und
- Fig. 6: eine Ansicht wie Fig. 4 und 5, wobei eine weitere abgewandelte Ausführungsform gezeigt ist.

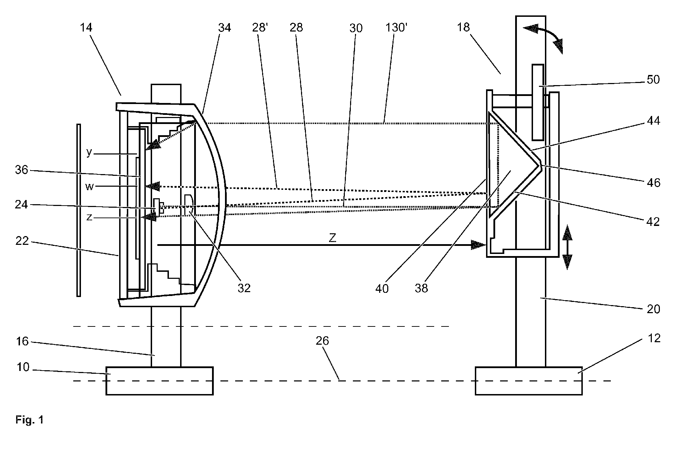

In den Fig. 1 bis 3 ist ein erstes Beispiel einer erfindungsgemäßen Vorrichtung zur Ermittlung der Ausrichtung einer ersten Welle 10 einer (nicht gezeigten) Maschine und einer zweiten Welle 12 einer (nicht gezeigten) Maschine zueinander gezeigt. Die Vorrichtung umfasst eine erste Messeinheit 14 mit einem Element 16 zum Ansetzen an eine Umfangsfläche der ersten Welle 10 sowie eine zweite Messeinheit 18 mit einem Element 20 zum Ansetzen an die Umfangsfläche der zweiten Welle 12. Ferner umfasst die Vorrichtung eine Auswerteeinheit 22, die im gezeigten Beispiel einen Teil der ersten Messeinheit 14 bildet, jedoch auch als Teil eines externen Geräts implementiert sein könnte. Die beiden Wellen 10 und 12 sind möglichst fluchtend hintereinander bezüglich einer Referenzachse 24 angeordnet, wobei die Vorrichtung mit den beiden Messeinheiten 14, 18 dazu dient, einen eventuellen Winkelversatz und/oder Parallelversatz bezüglich der Referenzachse 26 bzw. relativ zueinander zu bestimmen. Die Vorrichtung umfasst typischerweise auch Mittel zum Anzeigen des Ergebnisses bezüglich Winkelversatz bzw. Parallelversatz (in den Figuren nicht dargestellt).

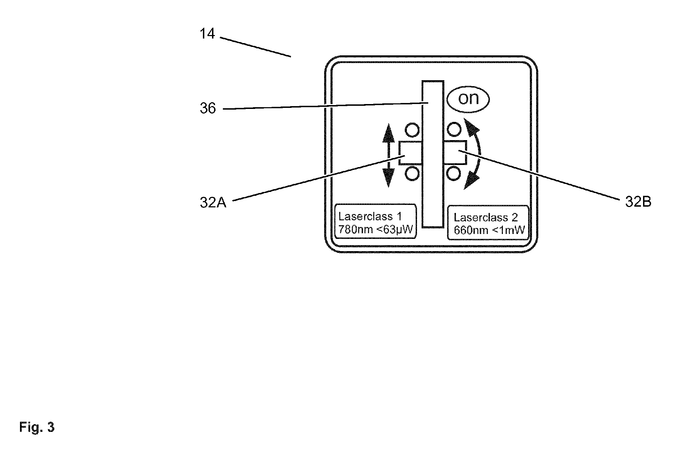

Die erste Messeinheit 14 umfasst eine Lichtquelle 24 zum Erzeugen eines ersten Lichtstrahlenbündels 28 sowie eines zweiten Lichtstrahlenbündels 30, einen Kollimator 32 zum Kollimieren des ersten und zweiten Lichtstrahlenbündels 28, 30, eine Abbildungsoptik 34 sowie einen positionsempfindlichen optischen Detektor 36. Die beiden Lichtstrahlenbündel 28, 30 unterscheiden sich spektral; beispielsweise kann eines der beiden Strahlbündel im roten Bereich liegen, beispielsweise bei etwa 660 nm, während das andere im infraroten Bereich (beispielsweise bei etwa 780 nm) liegen kann (in diesen Bereichen sind beispielsweise geeignete Laserdioden verfügbar). Als Lichtquelle kann dabei beispielsweise eine Dual-Wave-Laserdiode zur Erzeugung beider Lichtstrahlenbündel 28, 30 verwendet werden, oder es werden alternativ zwei unterschiedliche Laserdioden, d.h. eine separate Laserdiode für jedes beiden Lichtstrahlenbündel, verwendet, wie dies beispielsweise in Fig. 3 bei 24A und 24B angedeutet ist; in diesem Fall werden auch zwei getrennte Kollimatoren 32A und 32B verwendet. Geeignete Laserdioden sind beispielsweise von der Firma Rohm, Japan, erhältlich.

Die beiden Lichtstrahlenbündel 28, 30 werden im Wesentlichen in die gleiche Richtung abgestrahlt, weisen jedoch in der Praxis eine gewisse geringe gegenseitige Divergenz auf, beispielsweise 11 *mm*/*m.*

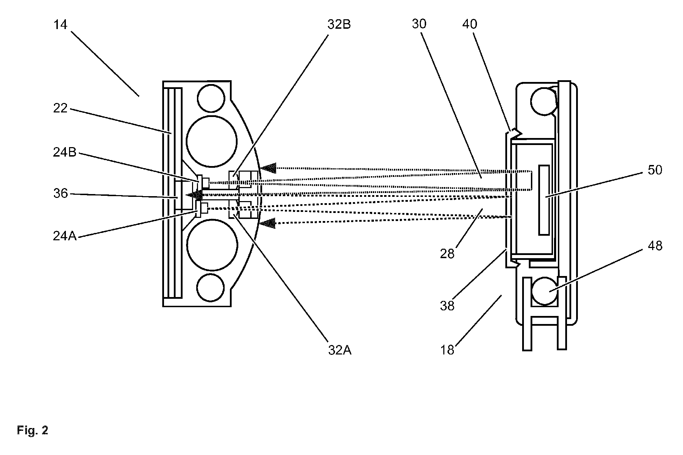

Der Kollimator 32, 32A, 32B kann beispielsweise eine Brennweite von 10 mm aufweisen. Im Beispiel von Fig. 1 bis 3 ist der Kollimator 32, 32A, 32B jeweils als Fächerkollimator ausgebildet, um die beiden von der Lichtquelle 24, 24A, 24B erzeugten unterschiedlichen Lichtstrahlenbündel aufzufächern, wie dies in Fig. 2 angedeutet ist.

Der Detektor 36 ist in dem in Fig. 1 bis 3 gezeigten Beispiel als linienförmiger Detektor ausgebildet, wobei die Auftrefflinie des Fächerprofils des ersten und zweiten Lichtstrahlenbündels 28, 30 auf dem Detektor 36 im Wesentlichen senkrecht zu der Längsrichtung des Detektors 36 steht. Der Detektor 36 kann als analoger Streifendetektor ausgebildet sein, beispielsweise eindimensionaler Silizium-PSD (Position Sensitive Detector), oder er kann als digitaler Zeilendetektor ausgebildet sein. In letzterem Fall ist der Detektor 36 so angeordnet, dass die Fächerebene der auf den Detektor 36 auftreffenden Lichtstrahlenbündel 28, 30 im Wesentlichen senkrecht zur Zeilenrichtung steht.

Gemäß einer Ausführungsform kann der Detektor 36 farbempfindlich ausgebildet sein, um das Auftreffen des ersten und zweiten Lichtstrahlenbündels 28, 30 auf dem Detektor 36 zu unterscheiden. Gemäß einer alternativen, bevorzugten Ausführungsform sind der Detektor 36 sowie die Lichtquelle 24, 24A, 24B so ausgebildet, dass das Auftreffen des ersten und zweiten Lichtstrahlenbündels 28, 30 auf dem Detektor 36 durch unterschiedliche zeitliche Steuerung der Intensität des ersten und zweiten Lichtstrahlenbündels 28, 30 unterscheidbar ist, d.h. das erste und zweite Lichtstrahlenbündel 28, 30 werden zu unterschiedlichen Zeiten erzeugt und können auf diese Weise durch Setzen des entsprechenden Zeitfensters bei der Detektion unterschieden werden.

Die zweite Messeinheit 18 weist eine Reflektoranordnung 38 auf, die eine der ersten Messeinheit 14 zugewandte Frontfläche 40 und eine erste rückwärtige Fläche 42 sowie eine zweite rückwärtige Fläche 44 aufweist, wobei die rückwärtigen Flächen 42, 44 unter einem Winkel, typischerweise einem rechten Winkel, zueinander angeordnet sind und dabei eine Dachkante 46 zwischen sich bilden (in den gezeigten Beispielen ist die Reflektoranordnung als sogenanntes Porro-Prisma (auch als Dachkantprisma bezeichnet) ausgebildet, wobei die beiden paralleln Seitenflächen des Prismas von kongruenten rechtwinkligen Dreiecken gebildet werden, die von zu den Dreiecksflächen senkrecht stehenden Begrenzungsflächen verbunden werden). Die Dachkante 46 ist dabei im Wesentlichen parallel zu der Fächerebene der Lichtstrahlenbündel 28, 30 und senkrecht zu der Längsrichtung des linienförmigen Detektors 36 angeordnet.

Die Frontfläche 40 ist als Farbteiler ausgebildet und ist dabei für eines der beiden Lichtstrahlenbündel, z.B. für das erste Lichtstrahlenbündel 28, stärker reflektierend als für das andere Lichtstrahlenbündel (in diesem Fall das zweite Lichtstrahlenbündel 30) und entsprechend für das zweite Lichtstrahlenbündel 30 stärker transmittierend als für das erste Lichtstrahlenbündel 28 ausgebildet. Das von der Frontfläche 40 transmittierte Lichtstrahlenbündel, d.h. im Beispiel das zweite Lichtstrahlenbündel 30, wird von der einen rückwärtigen Fläche (im Beispiel von der ersten rückwärtigen Fläche 42) zur anderen rückwärtigen Fläche (im Beispiel zur zweiten rückwärtigen Fläche 44) reflektiert und von dort durch die Frontfläche 40 hindurch in Richtung der ersten Messeinheit 14 reflektiert (der reflektierte Teil des zweiten Strahlenbündels 30 ist in den Fig. 1 und 2 mit 30' bezeichnet).

Die Frontfläche 40 kann beispielsweise als Kaltlichtspiegel ausgebildet sein, d.h. sie lässt längere Wellenlängen durch.

Das erste Lichtstrahlenbündel 28 wird bereits an der Frontfläche 40 in Richtung der ersten Messeinheit 14 reflektiert (der reflektierte Teil ist in den Fig. 1 und 2 mit 28' bezeichnet). Die reflektierten Strahlenbündel 28', 30' werden mittels der Abbildungsoptik 34 auf den Detektor 36 abgebildet.

Bei der Abbildungsoptik 34 kann es sich beispielsweise um eine sphärische Linse handeln. Die Abbildungsoptik 34 ist optional und ermöglicht eine Vergrößerung des Messbereichs, da sie auch noch einen Teil der Strahlen, der ansonsten am Detektor vorbeigehen würde, auf den Detektor 36 gelenkt (dies ist anhand eines gestrichelt eingezeichneten Randstrahls in Fig. 1 angedeutet).

Die erste Messeinheit 14 ist so ausgebildet, dass die beiden Lichtstrahlenbündel 28, 30 direkt ohne Zwischenschaltung eines reflektierenden Elements auf die Reflektoranordnung 38 der zweiten Messeinheit 18 gerichtet werden, d.h. zwischen der Lichtquelle 24, 24A, 24B und der Reflektoranordnung 38 sind keine reflektierenden Elemente angeordnet.

Die Fächerebenen des ersten und zweiten Lichtstrahlenbündels 28, 30 sind im Wesentlichen tangential bezüglich der Umfangsflächen der Wellen 10 bzw. 12 orientiert. Gleichermaßen ist die Dachkante 46 der Reflektoranordnung 38 im Wesentlichen tangential bezüglich der Umfangsflächen der Wellen 10 und 12 orientiert. Ferner ist die Längsrichtung des Detektors 36 im Wesentlichen radial bezüglich der Umfangsflächen der Wellen 10 und 12 orientiert.

Zwecks Justierung der beiden Messeinheiten 14, 18 relativ zueinander, ist die zweite Messeinheit 18 mit einer Höhenverstellung 48 und einer Winkelverstellung 50 versehen, wobei die Höhenverstellung 48 dazu dient, die Position der zweiten Messeinheit 18 in radialer Richtung bezüglich der Welle 12 zu verstellen und die Winkelverstellung 50 dazu dient, die zweite Messeinheit 18 bezüglich der radialen Richtung der Welle 12 zu verkippen (diese beiden Verstellmöglichkeiten sind in Fig. 1 durch Doppelpfeile angedeutet). Eine Verstellung der zweiten Messeinheit 18 um die radiale Richtung ist aufgrund der fächerförmigen Ausbildung der Lichtstrahlenbündel 28, 30 nicht erforderlich, da in dieser Richtung der Detektor 36 ohnehin getroffen wird und in dieser Richtung keine Auflösung vorgesehen ist.

In dem in Fig. 1 gezeigten Beispiel sind die beiden Laserdioden 24A, 24B seitlich in Abstand voneinander angeordnet, so dass das von der Reflektoranordnung 38 reflektierte Licht gegebenenfalls zwischen den beiden Laserdioden 24A, 24B hindurch auf den Detektor 36 gelangen kann.

Nach erfolgter Justierung der ersten Messeinheit 14 und der zweiten Messeinheit 18 zueinander zeigt die Auftreffposition des reflektierten ersten Strahlenbündels 28' und des reflektierten zweiten Strahlenbündels 30' im Prinzip die Fehlausrichtung der beiden Wellen 10 und 12 zueinander an, wenn die beiden Wellen 10 und 12 gemeinsam mit den darauf befindlichen Messeinheiten 14, 18 um die Achse 26 gedreht werden, wobei dann der Verlauf des Auftreffpunkts in Abhängigkeit vom Drehwinkel verfolgt und in an sich bekannter Weise ausgewertet wird, um den vertikalen Versatz, horizontalen Versatz und den Winkelversatz der Wellen 10, 12 zu ermitteln (ein solches Verfahren ist beispielsweise in der DE 39 11 307 A1 für ein einzelnes Strahlenbündel beschrieben).

Nach Ermittlung der Fehlausrichtung wird in einer bestimmten Winkelposition eine Justierung der Wellen 10, 12 vorgenommen, wobei während der Wellenjustierung gemessen wird, um festzustellen, wann die Fehlausrichtung am besten korrigiert ist.

Bei dem herkömmlichen Verfahren, wie es beispielsweise in der DE 39 11 307 A1 beschrieben ist, wird dabei in der "13:30 h-Position" gemessen, wobei aber nur entweder die horizontale oder die vertikale Richtung justiert werden darf, da ansonsten das von den Messeinrichtungen angezeigte Ergebnis nicht zutreffend ist.

Bei der Vorrichtung gemäß Fig. 1 bis 3 wird dagegen die radiale Richtung immer richtig angezeigt, egal in welcher Richtung die Wellen zueinander justiert werden; allerdings gibt es für die tangentiale Richtung keine Anzeige, d.h. man muss die andere Richtung in einer anderen Position der Messeinrichtung 14, 18 (d.h. in einer anderen Winkelposition der Wellen) justieren.

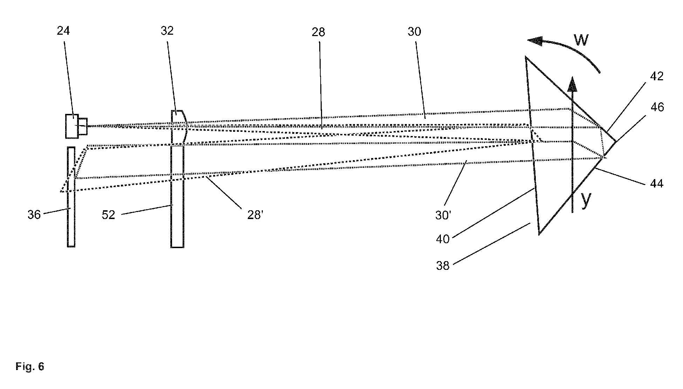

Eine schematische Darstellung einer Abwandlung des in Fig. 1 bis 3 gezeigten Systems ist in Fig. 6 dargestellt, wo die Lichtquelle 24 für die beiden fächerförmigen Lichtstrahlenbündel 28, 30 in Längsrichtung des Detektors 36 versetzt bezüglich des Detektors 36 angeordnet ist und wobei keine Abbildungsoptik für den Detektor 36 vorgesehen ist, sondern ein Farbfilterfenster 52. Der Fächerkollimator 32 ist ebenfalls in Längsrichtung des Detektors 36, d.h. in radialer Richtung bezüglich der Wellen 10, 12, bezüglich des Farbfilterfensters 52 versetzt angeordnet.

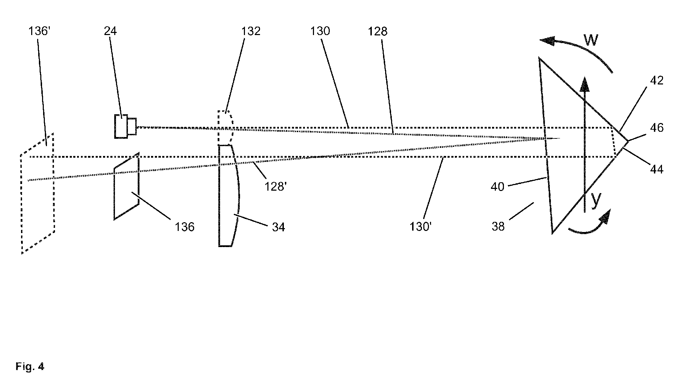

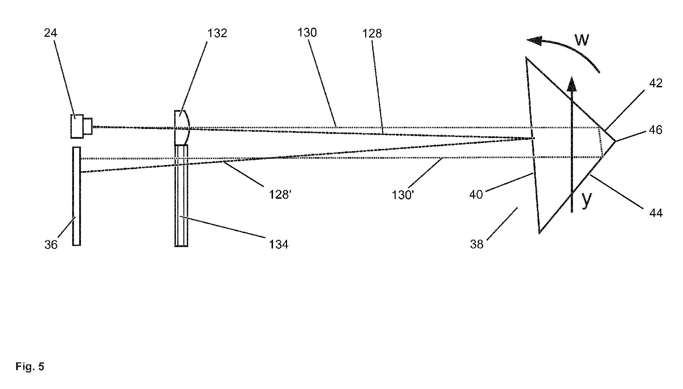

In Fig. 4 und 5 sind zwei Ausführungsbeispiele gezeigt, bei welchen die Lichtstrahlenbündel 128, 130 nicht als fächerförmige Bündel ausgebildet sind, sondern als zylindrische bzw. konische Bündel; entsprechend ist der Kollimator 132 nicht als Fächerkollimator ausgebildet. Der Detektor 136 ist im Gegensatz zu den bisher beschriebenen Ausführungsformen nicht als linienförmiger Detektor sondern als Flächendetektor, d.h. als zweidimensionaler (und nicht als eindimensionaler) Detektor ausgebildet, wobei beide Koordinaten des Auftreffpunkts der reflektierten Lichtstrahlenbündel 128', 130' auf dem Detektor 136 ausgewertet werden (und nicht nur eine Koordinate, wie bei den bisher beschriebenen Beispielen). Dadurch, dass dem Flächendetektor 136 eine sphärische Linse 134 als Abbildungsoptik vorgeschaltet ist, ergibt sich die bereits im Zusammenhang mit der Fig. 1 angedeutete Messbereichserweiterung, die in Fig. 4 durch die Andeutung eines gestrichelten "virtuellen Detektors" 136' veranschaulicht ist.

In Fig. 5 ist eine Abwandlung der Ausführungsform von Fig. 4 gezeigt, wo wie in Fig. 4 das erste und zweite Lichtstrahlenbündel 128, 130 nicht aufgefächert werden. Im Gegensatz zu der Ausführungsform von Fig. 4 ist bei der Ausführungsform von Fig. 5 jedoch keine sphärische Linse 34 als Abbildungsoptik vorgesehen, sondern eine Zylinderlinse 134, und statt des flächigen Detektors 136 ist wie in der Ausführungsform von Fig. 1 bis 3 ein linienförmiger Detektor 36 vorgesehen, dessen Längsrichtung sich senkrecht zu der Dachkante 46 und in radialer Richtung bezüglich der Wellen 10, 12 orientiert ist. Die Zylinderlinse 134 ist dabei so angeordnet, dass ihre Brennlinie sich in der Längsrichtung des linienförmigen Detektors 36 erstreckt (bei der Ausführungsform von Fig. 4 liegt der Detektor 136 in der Brennebene der Linse 34).

Durch die Verwendung der Zylinderlinse 134 als Abbildungsoptik fällt der reflektierte Strahl 128', 130' unabhängig von der genauen Winkelausrichtung der Reflektoranordnung 38 um die y-Achse immer auf den linienförmigen Detektor 36, so dass auf eine Verstellbarkeit bzw. Justierung der Reflektoranordnung 38 um die y-Achse - ähnlich wie bei der Auffächerung des ersten und zweiten Lichtstrahlenbündels 28, 30 bei den Ausführungsformen gemäß den Fign. 1 bis 3 und 6 - verzichtet werden. Allerdings wird auch bei der Ausführungsform von Fig. 5, wie bei den Ausführungsformen gemäß Fig. 1 und 3 und 6, auf die laterale Auflösung bei der Messung verzichtet, so dass die mehreren Drehwinkelpositionen der Wellen 10, 12 gemessen werden muss, um die volle zur Ermittlung der Fehlausrichtung der Wellen 10, 12 erforderliche Information zu erhalten.

Die üblicherweise vorhandene Divergenz der beiden Lichtstrahlenbündel 28, 30 bzw. 128, 130 kann zur Abschätzung des Abstands zwischen der ersten Messeinheit 14 und der zweiten Messeinheit 18 verwendet werden, da sich aus dieser Divergenz ein entsprechender Abstand zwischen den Auftreffpunkten der reflektierten Lichtstrahlenbündel 28', 30' bzw. 128', 130' ergibt.

Es versteht sich, dass die Reflektoranordnung 38 statt als Prisma auch "hohl" ausgebildet sein kann, wobei die Seitenflächen des Primas dann funktional durch entsprechene Spiegel bzw. Spiegelflächen realisiert werden.

## Patentansprüche

1. Vorrichtung zum Ermitteln der Lage eines ersten mechanischen Elements (10) und eines zweiten mechanischen Elements (12) zueinander, mit einer ersten Messeinheit (14) zum Ansetzen an das erste mechanische Element, einer zweiten Messeinheit (18) zum Ansetzen an das zweite mechanische Element, sowie einer Auswerteeinheit (22),
wobei die erste Messeinheit Mittel (24, 24A, 24B; 32, 32A, 32B, 132) zum Erzeugen eines ersten Lichtstrahlenbündels (28, 128) und eines zweiten Lichtstrahlenbündels (30, 130), die im wesentlichen in die gleiche Richtung abgestrahlt werden, sich aber spektral unterscheiden, und einen positionsempfindlichen optischen Detektor (36, 136) aufweist,
wobei die zweite Messeinheit eine Reflektoranordnung (38) aufweist, welche der ersten Messeinheit zugewandt ist, wenn die Messeinheiten an das jeweilige mechanische Element angesetzt sind, um das erste und zweite Lichtstrahlenbündel auf den Detektor zu reflektieren,
wobei eine der ersten Messeinheit zugewandte Fläche (40) als Farbteiler und dabei für das erste Lichtstrahlenbündel stärker reflektierend als für das zweite Lichtstrahlenbündel und für das zweite Lichtstrahlenbündel stärker transmittierend als für das erste Lichtstrahlenbündel ausgebildet ist, wobei mindestens eine erste rückwärtige Fläche (42) der Reflektoranordnung vorgesehen ist, um das transmittierte zweite Lichtstrahlenbündel durch die der ersten Messeinheit zugewandten Fläche hindurch zu reflektieren,
wobei die Auswerteeinheit ausgebildet ist, um aus den Auftreffpositionen des reflektierten ersten (28', 128') und zweiten (30', 130') Lichtstrahlenbündels auf dem Detektor die Lage des ersten mechanischen Elements und des zweiten mechanischen Elements zueinander zu ermitteln, und wobei das erste (28, 128) und zweite (30, 130) Lichtstrahlenbündel mittels einer Dual-Wave-Laserdiode (24) oder separat mittels zweier parallel nebeneinander angeordneter Laserdioden (24A, 24B) erzeugt werden.

2. Vorrichtung gemäß Anspruch 1, **dadurch gekennzeichnet, dass** das erste (28, 128) und zweite (30, 130) Lichtstrahlenbündel mittels eines gemeinsamen Kollimators (32, 132) kollimiert werden.

3. Vorrichtung gemäß einem der vorhergehenden Ansprüche, **dadurch gekennzeichnet, dass** die Mittel (24, 24A, 248; 32, 32A, 32B, 132) zum Erzeugen des ersten (28, 128) und zweiten (30, 130) Lichtstrahlenbündels ausgebildet sind, um beide Lichtstrahlenbündel direkt ohne Zwischenschaltung eines reflektierenden Element auf die Reflektoranordnung (38) zu richten.

4. Vorrichtung gemäß einem der vorhergehenden Ansprüche, **dadurch gekennzeichnet, dass** die als Farbteiler wirkende Fläche (40) der Reflektoranordnung (38) als Kaltlichtspiegel ausgebildet ist.

5. Vorrichtung gemäß einem der vorhergehenden Ansprüche, **dadurch gekennzeichnet, dass** zusätzlich zu der ersten ersten rückwärtige Fläche (42) eine zweite rückwärtige Fläche (44) der Reflektoranordnung (38) vorgesehen ist, die unter einem Winkel zu der ersten rückwärtigen Fläche angeordnet ist, um das transmittierte zweite Lichtstrahlenbündel von der der ersten rückwärtigen Fläche zur zweiten rückwärtigen Fläche und von dort durch die der ersten Messeinheit zugewandten Fläche hindurch zu reflektieren

6. Vorrichtung gemäß einem der vorhergehenden Ansprüche, **dadurch gekennzeichnet, dass** die erste (42) und zweite (44) rückwärtige Fläche der Reflektoranordnung (38) in etwa senkrecht zueinander stehen.

7. Vorrichtung gemäß einem der vorhergehenden Ansprüche, **dadurch gekennzeichnet, dass** die Reflektoranordnung (38) als Prisma, insbesondere als Porro-Prisma oder Tripel-Prisma, ausgebildet ist.

8. Vorrichtung gemäß einem der vorhergehenden Ansprüche, **dadurch gekennzeichnet, dass** die Mittel (24, 24A, 24B; 32, 32A, 32B) zum Erzeugen des ersten (28) und zweiten (30) Lichtstrahlenbündels ausgebildet sind, um das erste und zweite Lichtstrahlenbündel jeweils fächerförmig zu erzeugen, wobei der Detektor (36) linienförmig ausgebildet ist

9. Vorrichtung gemäß Anspruch 8, **dadurch gekennzeichnet, dass** die Auftreff-Linie des Fächerprofils des reflektierten ersten (28') und zweiten (30') Lichtstrahlenbündels auf dem Detektor (36) im wesentlichen senkrecht zu der Längsrichtung des Detektors steht.

10. Vorrichtung gemäß einem der Ansprüche 8 und 9, **dadurch gekennzeichnet, dass** die Fächerebene des auf die Reflektoranordnung (38) gerichteten ersten (28) bzw. zweiten (30) Lichtstrahlenbündels im wesentlichen parallel zu einer Dachkante (46) der Reflektoranordnung orientiert ist.

11. Vorrichtung gemäß einem der Ansprüche 8 bis 10, **dadurch gekennzeichnet, dass** die Mittel zum Erzeugen des ersten (28) und des zweiten (30) Lichtstrahlenbündels mindestens eine Laser-Diode (24, 24A, 24B) und mindestens einen Fächerkollimator (32, 32A, 32B) aufweisen.

12. Vorrichtung gemäß einem der Ansprüche 8 bis 11, **dadurch gekennzeichnet, dass** der Detektor (36) als Streifendetekor oder als Zeilendetektor ausgebildet.

13. Vorrichtung gemäß Anspruch 12, **dadurch gekennzeichnet, dass** die Fächerebene des auf den Detektor (36) auftreffenden reflektierten ersten (28') bzw. zweiten (30') Lichstrahlenbündel im wesentlichen senkrecht zur Streifenrichtung bzw. Zeilenrichtung steht.

14. Vorrichtung gemäß einem der vorhergehenden Ansprüche, **dadurch gekennzeichnet, dass** der Detektor (36) farbempfindlich ist, um das Auftreffen des reflektierten ersten (28', 128') und zweiten (30', 130') Lichtstrahlenbündels auf dem Detektor (36, 136) zu unterscheiden.

15. Vorrichtung gemäß einem der Ansprüche 1 bis 13, **dadurch gekennzeichnet, dass** der Detektor (36, 136) sowie die Mittel (24, 24A, 24B) zum Erzeugen des ersten (28, 128) und zweiten (30, 130) Lichtstrahlenbündels so ausgebildet sind, dass das Auftreffen des ersten und zweiten Lichtstrahlenbündels auf dem Detektor durch unterschiedliche zeitliche Steuerung der Intensität des ersten und zweiten Lichtstrahlenbündels unterscheidbar ist.

16. Vorrichtung gemäß einem der vorhergehenden Ansprüche, **dadurch gekennzeichnet, dass** es sich bei dem ersten mechanischen Element um eine erste Welle (10) und bei dem zweiten mechanischen Element um eine zweite Welle (12) handelt, wobei die erste Messeinheit (14) zum Ansetzen an eine Umfangsfläche der ersten Welle und die zweite Messeinheit (18) zum Ansetzen an eine Umfangsfläche der zweiten Welle ausgebildet sind.

17. Vorrichtung gemäß Anspruch 8 und 16, **dadurch gekennzeichnet, dass** die Fächerebene des ersten (28) bzw. zweiten (30) Lichtstrahlenbündels jeweils im wesentlichen tangential bzgl. der Wellenumfangsflächen orientiert ist.

18. Vorrichtung gemäß Anspruch 11 oder 12 und 16, **dadurch gekennzeichnet, dass** die Längsrichtung des Detektors (36) im wesentlichen radial bzgl. der Wellenumfangsflächen orientiert ist.

19. Vorrichtung gemäß einem der Ansprüche 16 bis 18, **dadurch gekennzeichnet, dass** eine Dachkante (46) der Reflektoranordnung (38) im wesentlichen tangential bzgl. der Wellenumfangsflächen orientiert ist.

20. Vorrichtung gemäß einem der vorhergehenden Ansprüche, **dadurch gekennzeichnet, dass** dem Detektor (36, 136) eine Abbildungsoptik mit einer sphärischen Linse (34) oder einer Zylinderlinse (134) vorgeschaltet ist, um das von der Reflektoranordnung (38) reflektierte erste (28', 128') und zweite (30', 130') Strahlenbündel auf den Detektor abzubilden.

21. Vorrichtung gemäß Anspruch 11 oder 12 und 20, **dadurch gekennzeichnet, dass** die Abbildungsoptik eine Zylinderlinse (134) aufweist, deren Brennlinie im wesentlichen in Längsrichtung des Detektors (36) verläuft.

22. Vorrichtung gemäß einem der vorhergehenden Ansprüche, **dadurch gekennzeichnet, dass** dem Detektor (38, 136) ein Farbfilterfenster (52) vorgeschaltet ist.

23. Vorrichtung gemäß einem der vorhergehenden Ansprüche, **dadurch gekennzeichnet, dass** die Mittel (24, 24A, 24B; 32, 32A, 32B, 132) zum Erzeugen des ersten (28, 128) und zweiten (30, 130) Lichtstrahlenbündels und der Detektor (36, 136) seitlich versetzt zueinander angeodnet sind.

24. Vorrichtung gemäß einem der vorhergehenden Ansprüche, **dadurch gekennzeichnet, dass** die Abbildungsoptik (34, 134) und mindestes ein Kollimator (32, 32A, 32B, 132) des ersten (28, 128) und zweiten (30, 130) Lichtstrahlenbündels seitlich versetzt zueinander angeordnet sind.

## Claims

1. Apparatus for ascertaining the position of a first mechanical element (10) and of a second mechanical element (12) relative to to one another, having a first measurement unit (14) for being placed on the first mechanical element, a second measurement unit (18) for being placed on the second mechanical element, and an evaluation unit (22),
wherein the first measurement unit has means (24, 24A, 24B; 32, 32A, 32B, 132) for generating a first light ray beam (28, 128) and a second light ray beam (30, 130) which are emitted substantially in the same direction but differ spectrally, and a position-sensitive optical detector (36, 136),
wherein the second measurement unit has a reflector arrangement (38), which faces the first measurement unit if the measurement units are placed on the respective mechanical element in order to reflect the first and second light ray beams onto the detector, wherein a surface (40) facing the first measurement unit is configured as a colour splitter and as a result reflects the first light ray beam to a greater extent than the second light ray beam and transmits the second light ray beam to a greater extent than the first light ray beam, wherein at least one rearward surface (42) of the reflector arrangement is provided for reflecting the transmitted second light ray beam through the surface facing the first measurement unit,
wherein the evaluation unit is configured to ascertain the position of the first mechanical element and of the second mechanical element relative to one another from the positions of impingement of the reflected first (28', 128') and second (30', 130') light ray beams on the detector, and wherein the first (28, 128) and second (30, 130) light ray beams are generated using a dual wave laser diode (24) or separately using two parallel laser diodes (24A, 24B) which are arranged one next to the other.

2. Apparatus according to Claim 1, **characterized in that** the first (28, 128) and second (30, 130) light ray beams are collimated using a common collimator (32, 132).

3. Apparatus according to one of the preceding claims, **characterized in that** the means (24, 24A, 24B; 32, 32A, 32B, 132) for generating the first (28, 128) and second (30, 130) light ray beams are configured to target both light ray beams directly onto the reflector arrangement (38) without interconnecting a reflective element.

4. Apparatus according to one of the preceding claims, **characterized in that** the surface (40), which acts as a colour splitter, of the reflector arrangement (38) is configured as a cold mirror.

5. Apparatus according to one of the preceding claims, **characterized in that**, in addition to the first rearward surface (42), a second rearward surface (44) of the reflector arrangement (38) is provided, which is arranged at an angle relative to the first rearward surface so as to reflect the transmitted second light ray beam of the first rearward surface towards the second rearward surface and from there through the surface facing the first measurement unit.

6. Apparatus according to one of the preceding claims, **characterized in that** the first (42) and second (44) rearward surfaces of the reflector arrangement (38) are approximately perpendicular to one another.

7. Apparatus according to one of the preceding claims, **characterized in that** the reflector arrangement (38) is configured as a prism, in particular a Porro prism or triprism.

8. Apparatus according to one of the preceding claims, **characterized in that** the means (24, 24A, 24B; 32, 32A, 32B) for generating the first (28) and second (30) light ray beams are configured to generate the first and second light ray beams in each case in the shape of a fan, wherein the detector (36) is configured to be in the shape of a line.

9. Apparatus according to Claim 8, **characterized in that** the impingement line of the fan profile of the reflected first (28') and second (30') light ray beams on the detector (36) is substantially perpendicular to the longitudinal direction of the detector.

10. Apparatus according to one of Claims 8 and 9, **characterized in that** the fan plane of the first (28) and second (30) light ray beams targeted at the reflector arrangement (38) is oriented substantially parallel to a roof edge (46) of the reflector arrangement.

11. Apparatus according to one of Claims 8 to 10, **characterized in that** the means for generating the first (28) and second (30) light ray beams have at least one laser diode (24, 24A, 24B) and at least one fan collimator (32, 32A, 32B).

12. Apparatus according to one of Claims 8 to 11, **characterized in that** the detector (36) is configured as a strip detector or a line detector.

13. Apparatus according to Claim 12, **characterized in that** the fan plane of the reflected first (28') and second (30') light ray beams impinging on the detector (36) is substantially perpendicular to the strip direction or line direction.

14. Apparatus according to one of the preceding claims, **characterized in that** the detector (36) is colour sensitive in order to differentiate between the impingement of the reflected first (28', 128') and second (30', 130') light ray beams on the detector (36, 136).

15. Apparatus according to one of Claims 1 to 13, **characterized in that** the detector (36, 136) and the means (24, 24A, 24B) for generating the first (28, 128) and second (30, 130) light ray beams are configured such that the impingement of the first and second light ray beams on the detector can be differentiated by various time control of the intensity of the first and second light ray beams.

16. Apparatus according to one of the preceding claims, **characterized in that** the first mechanical element is a first shaft (10) and the second mechanical element is a second shaft (12), wherein the first measurement unit (14) is configured for being placed on a circumferential surface of the first shaft and the second measurement unit (18) is configured for being placed on a circumferential surface of the second shaft.

17. Apparatus according to Claims 8 and 16, **characterized in that** the fan plane of the first (28) and second (30) light ray beams is oriented in each case substantially tangentially with respect to the shaft circumferential surfaces.

18. Apparatus according to Claims 11 or 12 and 16, **characterized in that** the longitudinal direction of the detector (36) is oriented substantially radially with respect to the shaft circumferential surfaces.

19. Apparatus according to one of Claims 16 to 18, **characterized in that** a roof edge (46) of the reflector arrangement (38) is oriented substantially tangentially with respect to the shaft circumferential surfaces.

20. Apparatus according to one of the preceding claims, **characterized in that** an imaging optical unit having a spherical lens (34) or a cylindrical lens (134) is connected upstream of the detector (36, 136) in order to image the first (28', 128') and second (30', 130') ray beam reflected by the reflector arrangement (38) onto the detector.

21. Apparatus according to Claims 11 or 12 and 20, **characterized in that** the imaging optical unit has a cylindrical lens (134), the focal line of which runs substantially in the longitudinal direction of the detector (36).

22. Apparatus according to one of the preceding claims, **characterized in that** a colour filter window (52) is connected upstream of the detector (36, 136).

23. Apparatus according to one of the preceding claims, **characterized in that** the means (24, 24A, 24B; 32, 32A, 32B, 132) for generating the first (28, 128) and second (30, 130) light ray beams and the detector (36, 136) are arranged such that they are laterally offset with respect to one another.

24. Apparatus according to one of the preceding claims, **characterized in that** the imaging optical unit (34, 134) and at least one collimator (32, 32A, 32B, 132) of the first (28, 128) and second (30, 130) light ray beams are arranged such that they are laterally offset with respect to one another.

## Revendications

1. Dispositif de détermination de la position d'un premier élément mécanique (10) et d'un deuxième élément mécanique (12) l'un par rapport à l'autre, avec une première unité de mesure (14) à poser au niveau du premier élément mécanique, une deuxième unité de mesure (18) à poser au niveau du deuxième élément mécanique, ainsi qu'une unité d'analyse (22) ;
la première unité de mesure comportant des moyens (24, 24A, 24B ; 32, 32A, 32B, 132) de réalisation d'un premier faisceau lumineux (28, 128) et d'un deuxième faisceau lumineux (30, 130) rayonnant pour l'essentiel dans la même direction, en se distinguant toutefois sur le plan spectral, et un capteur optique (36, 136) sensible à la position ;
la deuxième unité de mesure comportant un agencement de réflecteur (38) orienté vers la première unité de mesure lorsque les unités de mesure sont placées au niveau de l'élément mécanique respectif, pour réfléchir les premier et deuxième faisceaux lumineux sur le capteur, une surface (40) orientée vers la première unité de mesure prenant la forme d'un séparateur de couleurs et étant réalisée en l'occurrence pour réfléchir plus fort pour le premier faisceau lumineux que pour le deuxième faisceau lumineux et pour émettre plus fort pour le deuxième faisceau lumineux que pour le premier faisceau lumineux, au moins une première surface arrière (42) de l'agencement de réflecteur étant prévue pour réfléchir le deuxième faisceau lumineux transmis à travers la surface orientée vers la première unité de mesure ;
l'unité d'analyse étant réalisée pour déterminer, à partir des positions de rencontre des premier (28', 128') et deuxième (30', 130') faisceaux lumineux réfléchis sur le capteur, la position du premier élément mécanique et du deuxième élément mécanique l'un par rapport à l'autre et les premier (28, 128) et deuxième (30, 130) faisceaux lumineux étant produits à l'aide d'une diode à laser (24) à double longueur d'onde ou de façon séparée à l'aide de deux diodes à laser (24A, 24B) disposées côte à côte parallèlement l'une par rapport à l'autre.

2. Dispositif selon la revendication 1, **caractérisé en ce que** les premier (28, 128) et deuxième (30, 130) faisceaux lumineux sont collimatés à l'aide d'un collimateur (32, 132) commun.

3. Dispositif selon l'une quelconque des revendications précédentes, **caractérisé en ce que** les moyens (24, 24A, 24B ; 32, 32A, 32B, 132) de réalisation du premier (28, 128) et deuxième (30, 130) faisceau lumineux sont réalisés pour diriger les deux faisceaux lumineux directement sans intercalage d'un élément réfléchissant sur l'agencement de réflecteur (38).

4. Dispositif selon l'une quelconque des revendications précédentes, **caractérisé en ce que** la surface (40) servant de séparateur de couleurs de l'agencement de réflecteur (38) prend la forme d'un miroir de lumière froid.

5. Dispositif selon l'une quelconque des revendications précédentes, **caractérisé en ce qu'**une deuxième surface arrière (44) de l'agencement de réflecteur (38), disposée selon un certain angle par rapport à la première surface arrière, est prévue en sus de la première surface arrière (42) pour réfléchir le deuxième faisceau lumineux transmis par la première surface arrière jusqu'à la deuxième surface arrière et de là à travers la surface orientée vers la première unité de mesure.

6. Dispositif selon l'une quelconque des revendications précédentes, **caractérisé en ce que** les première (42) et deuxième (44) surfaces arrières de l'agencement de réflecteur (38) sont disposées approximativement perpendiculairement l'une par rapport à l'autre.

7. Dispositif selon l'une quelconque des revendications précédentes, **caractérisé en ce que** l'agencement de réflecteur (38) prend la forme d'un prisme, notamment d'un prisme de Porro ou triple prisme.

8. Dispositif selon l'une quelconque des revendications précédentes, **caractérisé en ce que** les moyens (24, 24A, 24B ; 32, 32A, 32B) de réalisation du premier (28) et deuxième (30) faisceau lumineux sont réalisés pour réaliser respectivement les premier et deuxième faisceaux lumineux en forme d'éventail, le capteur (36) étant réalisé en forme de ligne.

9. Dispositif selon la revendication 8, **caractérisé en ce que** la ligne de rencontre du profil d'éventail du premier (28') et deuxième (30') faisceau lumineux réfléchi sur le capteur (36) est pour l'essentiel perpendiculaire à la direction longitudinale du capteur.

10. Dispositif selon l'une quelconque des revendications 8 et 9, **caractérisé en ce que** le plan d'éventail du premier (28) et/ou deuxième (30) faisceau lumineux orienté sur l'agencement de réflecteur (38) est orienté pour l'essentiel parallèlement à une arête de toit (46) de l'agencement de réflecteur.

11. Dispositif selon l'une quelconque des revendications 8 à 10, **caractérisé en ce que** les moyens de réalisation du premier (28) et deuxième (30) faisceau lumineux comportent au moins une diode laser (24, 24A, 24B) et au moins un collimateur en éventail (32, 32A, 32B).

12. Dispositif selon l'une quelconque des revendications 8 à 11, **caractérisé en ce que** le capteur (36) prend la forme d'un détecteur de bandes ou d'un détecteur de lignes.

13. Dispositif selon la revendication 12, **caractérisé en ce que** le plan d'éventail du premier (28') et/ou deuxième (30') faisceau lumineux réfléchi rencontrant le capteur (36) se place pour l'essentiel perpendiculairement à la direction des bandes et/ou à la direction des lignes.

14. Dispositif selon l'une quelconque des revendications précédentes, **caractérisé en ce que** le capteur (36) est sensible aux couleurs pour distinguer la rencontre du premier (28', 128') et deuxième (30', 130') faisceau lumineux réfléchi sur le capteur (36, 136).

15. Dispositif selon l'une quelconque des revendications 1 à 13, **caractérisé en ce que** le capteur (36, 136) ainsi que les moyens (24, 24A, 24B) de réalisation du premier (28, 128) et deuxième (30, 130) faisceau lumineux sont réalisés de telle sorte que la rencontre du premier et deuxième faisceau lumineux sur le capteur peut être différenciée par une commande de différente durée d'intensité du premier et deuxième faisceau lumineux.

16. Dispositif selon l'une quelconque des revendications précédentes, **caractérisé en ce que** le premier élément mécanique prend la forme d'un premier arbre (10) et que le deuxième élément mécanique prend la forme d'un deuxième arbre (12), la première unité de mesure (14) étant réalisée pour être posée au niveau d'une surface périphérique du premier arbre et la deuxième unité de mesure (18) étant réalisée pour être posée au niveau d'une surface périphérique du deuxième arbre.

17. Dispositif selon la revendication 8 et 16, **caractérisé en ce que** le plan d'éventail du premier (28) et/ou deuxième (30) faisceau lumineux est respectivement orienté pour l'essentiel tangentiellement par rapport aux surfaces périphériques des arbres.

18. Dispositif selon la revendication 11 ou 12 et 16, **caractérisé en ce que** la direction longitudinale du capteur (36) est pour l'essentiel orientée dans le plan radial par rapport aux surfaces périphériques des arbres.

19. Dispositif selon l'une quelconque des revendications 16 à 18, **caractérisé en ce qu'**une arête de toit (46) de l'agencement de réflecteur (38) est pour l'essentiel orientée tangentiellement par rapport aux surfaces périphériques des arbres.

20. Dispositif selon l'une quelconque des revendications précédentes, **caractérisé en ce qu'**un système optique déformant doté d'une lentille (34) sphérique ou d'une lentille (134) cylindrique est connecté en amont du capteur (36, 136), pour déformer sur le capteur le premier (28', 128') et deuxième (30', 130') faisceau lumineux réfléchi par l'agencement de réflecteur (38).

21. Dispositif selon la revendication 11 ou 12 et 20, **caractérisé en ce que** le système optique déformant comporte une lentille (134) cylindrique dont la ligne focale s'étend pour l'essentiel dans la direction longitudinale du capteur (36).

22. Dispositif selon l'une quelconque des revendications précédentes, **caractérisé en ce qu'**une fenêtre de filtre de couleur (52) est connectée en amont du capteur (36, 136).

23. Dispositif selon l'une quelconque des revendications précédentes, **caractérisé en ce que** les moyens (24, 24A, 24B ; 32, 32A, 32B, 132) de réalisation du premier (28, 128) et deuxième (30, 130) faisceau lumineux et des capteurs (36, 136) sont disposés en côté de façon décalée les uns par rapport aux autres.

24. Dispositif selon l'une quelconque des revendications précédentes, **caractérisé en ce que** le système optique déformant (34, 134) et au moins un collimateur (32, 32A, 32B, 132) du premier (28, 128) et deuxième (30, 130) faisceau lumineux sont disposés en côté de façon décalée les uns par rapport aux autres.
